# EUROPÄISCHE PATENTSCHRIFT

(11) **EP 0 489 944 B1**
(45) Veröffentlichungstag und Bekanntmachung des Hinweises auf die Patenterteilung: **20.09.1995**
(21) Anmeldenummer: 90123647.1
(22) Anmeldetag: 08.12.1990
(51) Int. Cl.: H04L 12/40

(54) **Master-Slave-Datenübertragungsverfahren mit flexiblem Eindraht-Bus**
Master-slave data communication method with flexible one-wire bus
Procédé de communication de données maître-esclave avec bus flexible à un câble

(43) Veröffentlichungstag der Anmeldung: 17.06.1992
(73) Patentinhaber: Deutsche ITT Industries GmbH, 79108 Freiburg (DE)
(72) Erfinder: Heberle, Klaus, Dipl.-Ing. (FH), W-7801 Reute (DE)

(56) Entgegenhaltungen:
- EP-A- 0 069 509
- EP-A- 0 217 571
- EP-A- 0 315 158
- US-A- 4 438 491
- IEEE TRANSACTIONS ON CONSUMER ELECTRONICS, Band CE-29, Nr. 3, August 1983, Seiten 297-304; F.W. GUTZWILLER et al.: " Homenet: a control network for consumer applications"
- NEW ELECTRONICS, Band 17, Nr. 8, April 1984, Seiten 27-28, 31, 33; T. DANBURY: "D2B - A digital data bus for small area networks"

## Beschreibung

Die Erfindung betrifft ein Master-Slave-Datenübertragungsverfahren mit einem Master, der an einen Slave Daten sendet oder von dort abruft, wobei der Datentransfer über einen Eindraht-Bus mittels eines Telegramms erfolgt, das folgende Teilabschnitte enthält: einen Adreßteil, der die Datensenke oder die Datenquelle im Slave definiert, einen Datenteil, der entweder die gesendeten oder die abgerufenen Daten enthält und schließlich eine Start- und eine Endinformation, vgl. den Oberbegriff des Anspruchs 1.

Ein derartiges Master-Slave-Datenübertragungsverfahren mit einem Eindraht-Bus ist an und für sich bekannt, beispielsweise auf dem Gebiet der Fernwirktechnik mit einem einzigen Datenübertragungskanal. In K. Steinbuch, "Taschenbuch der Nachrichtenverarbeitung", Springer-Verlag, 1962, werden in dem Kapitel 7.3 "Fernmeß- und Fernwirktechnik", Seiten 911 bis 934 ausführlich derartige Systeme in verschiedensten Ausführungen und Anwendungsfällen grundsätzlich behandelt.

Die konfliktfreie Steuerung des Eindraht-Busses erfordert im Falle von mehreren Mastern und/oder mehreren Slaves eine aufwendige Steuerschaltung, die man nur dann in Kauf nimmt, wenn zusätzliche Bus- und Steuerleitungen wegen der Entfernung unbedingt zu vermeiden sind. Der Fortschritt in der Integrationstechnik, insbesondere bei der monolithisch integrierten Schaltungstechnik, erlaubt es jedoch, bisher eher als passiv anzusehende Bauelemente mit "elektronischer Intelligenz" auszurüsten. Dies kann auch bei Datenübertragungsverfahren und zugehörigen Datenübertragungssystemen, bei denen der Entfernungsgesichtspunkt weniger entscheidend ist, wie noch gezeigt werden wird, zu großen Vorteilen führen.

Es ist daher Aufgabe der in den Ansprüchen gekennzeichneten Erfindung, ein Master-Slave-Datenübertragungsverfahren anzugeben, das einen flexiblen Eindraht-Bus mit einem mehrfachen Master- und einem mehrfachen Slave Betrieb ermöglicht und dessen Datenformat an die jeweilige Übertragungs- und Betriebsanforderung optimal angepaßt werden kann. Ferner ist es Aufgabe der Erfindung als Slave dienende Datenquellen anzugeben, die speziell an das beanspruchte Verfahren angepaßt und monolithisch integrierbar sind.

Die Lösung der Hauptaufgabe erfolgt nach den im Kennzeichen des Anspruchs 1 angegebenen Merkmalen. Weitere, vorteilhafte Ausführungen sind in abhängigen Ansprüchen unter Schutz gestellt. Die Lösung der Nebenaufgabe erfolgt nach den Merkmalen der unabhängigen Ansprüche 11 oder 16. Vorteilhafte Ausgestaltungen hierzu sind in den zugehörigen abhängigen Ansprüchen angegeben.

Einige der Vorteile, die sich durch die Erfindung ergeben, sind im folgenden aufgeführt:

Die Flexibilität des Master-Slave-Datenübertragungsverfahrens mit dem Eindraht-Bus ergibt sich im wesentlichen daraus, daß die einzelnen Elemente des Datenformats von Telegramm zu Telegramm sowohl in ihrer Anzahl als auch in sich variieren können.

Ein Vorteil ergibt sich aus der frei wählbaren Adreßlänge, wodurch der rasche Zugriff auf wichtige Daten über eine Kurzadresse ermöglicht wird.

Eine leichte Austauschbarkeit der Master oder Slaves ist ein weiterer Vorteil. Leicht austauschbare Bauelemente bei einem Bussystem erfordert beispielsweise im Reparaturfall der Kraftfahrzeugbereich. Der Bus wird dort verwendet, wo ein oder mehrere als Master dienende Prozessoren aus räumlich auseinanderliegenden Sensoren, die als Slaves dienen, Daten abrufen müssen.

Neben der Einsparung von Datenleitungen - es genügt ein einziger Eindraht-Bus, an den alle Elemente angeschlossen sind - ist auch die Anzahl der Kontaktanschlüsse der jeweiligen Bauelemente ein wichtiger Gesichtspunkt. Je weniger Anschlußbeine und Verbindungsleitungen vorhanden sind, desto weniger besteht die Gefahr der Vertauschung oder des Ausfalls durch Leitungsunterbrechungen oder Kontaktprobleme.

Die frei wählbare Adresslänge erleichtert auch den Austausch oder die Nachrüstung. Denn neue, zusätzliche Funktionen, die über längere Adressen als sogenannte Optionen abzurufen sind, kommen mit bisherigen Funktionen nicht in Konflikt, weil diese nach wie vor über die bisherigen, kürzeren Adressen abzurufen sind.

Ein weiterer Vorteil ergibt sich aus der Einsparung von Anschlußbeinen bei selbständigen Bauelementen, die in einem derartigen System zusammengekoppelt sind. Im Extremfall läßt sich die Anzahl der Anschlußbeine von "intelligenten" Sensoren, Speichern, Gebern usw. bis auf drei reduzieren.

Die Erfindung und ihre Vorteile werden nun anhand der Figuren der Zeichnung näher erläutert:
Fig. 1 zeigt schematisch ein einfaches Format des Telegramms auf dem Eindraht-Bus,
Fig. 2 zeigt schematisch ein erweitertes Format,
Fig. 3 zeigt schematisch als Blockschaltbild drei Master und vier Slaves, die über einen Eindraht-Bus miteinander gekoppelt sind,
Fig. 4 zeigt schematisch einen Telegrammausschnitt,
Fig. 5 zeigt schematisch als Blockschaltbild die einzelnen Funktionsgruppen eines Masters in einer aufwendigen Ausführung,
Fig. 6 zeigt als Blockschaltbild die einzelnen Funktionsgruppen eines Slaves in einer aufwendigen Ausführung,
Fig. 7 zeigt als Blockschaltbild schematisch eine Adreßlängen-Überprüfungseinrichtung,
Fig. 8 zeigt als Blockschaltbild schematisch eine Mehrfachdatenquelle in einem Slave, die Teil eines Sensorbauelementes ist,
Fig. 9 zeigt schematisch ein dreibeiniges Sensorbauelement,
Fig. 10 zeigt schematisch als Blockschaltbild ein erstes Speicherbauelement und
Fig. 11 zeigt schematisch ein dreibeiniges Speicherbauelement.

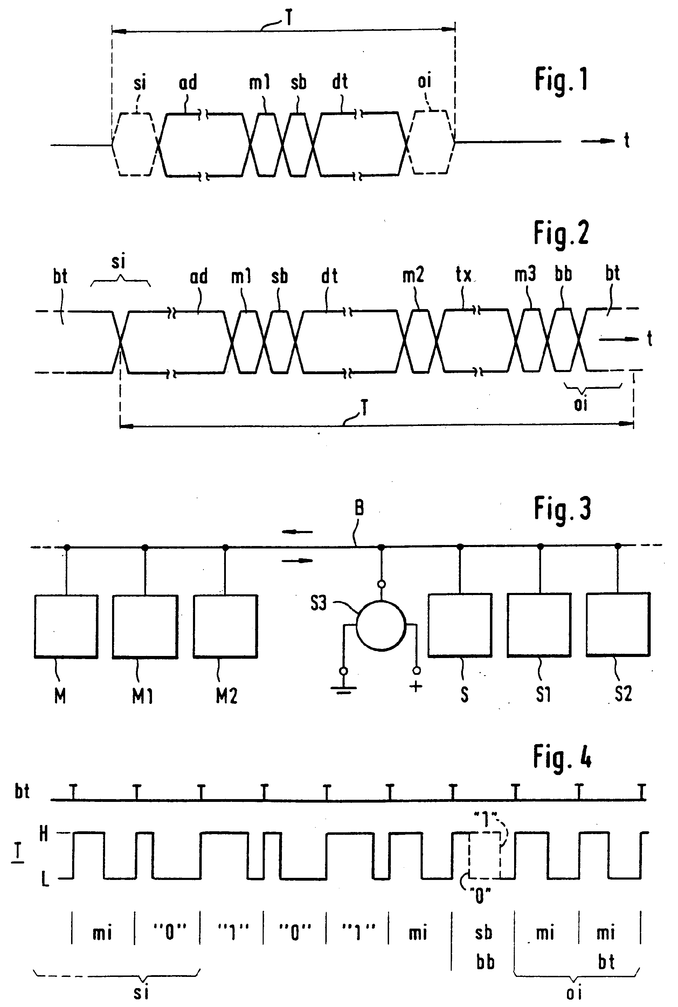

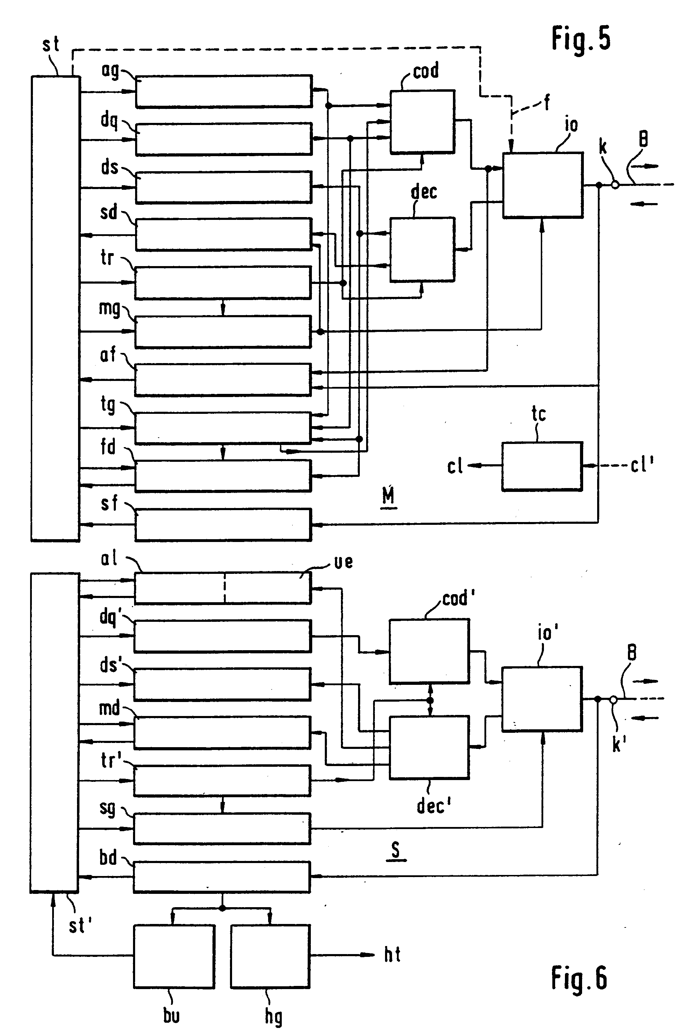

In Fig. 1 beginnt das Telegramm T mit einer Startinformation si. An dieses schließt sich ein in der Länge variable Adreßteil ad, eine erste Marke m1, ein Synchronisierbit sb, ein in der Länge variablen Teil dt und schließlich eine Endinformation oi an. Vor und nach dem Telegramm nimmt der Eindraht-Bus B (vgl. Fig. 3) einen Ruhe- oder Wartezustand ein. Im Ruhezustand wird der Eindraht-Bus entweder hochohmig geschaltet oder auf ein oberes oder unteres Schaltpotential gelegt, vgl. auch Fig. 4. Außerhalb des Telegramms T kann auf dem Eindraht-Bus ein Bittakt bt als Wartesignal übertragen werden. In diesem Fall kann die Übertragung spezieller Bits für die Start- und Endinformation si, oi entfallen. In bezug auf den Wartezustand mit gesendetem Bittakt ist die Startinformation si durch die letzte Bittaktperiode und die Endinformation oi durch zwei unmittelbar aufeinanderfolgende Bittaktperioden definiert. Zweckmäßigerweise ist die erste Marke m1 und das Synchronisierbit sb jeweils ebenfalls nur eine Bittaktperiode lang. Fig. 4 zeigt, wie über unterschiedliche Tastverhältnisse die einzelnen Signale unterscheidbar sind.

In Fig. 2 ist schematisch ein aufwendigeres Telegramm T dargestellt, das jedoch sämtliche aus Fig. 1 bekannten Elemente enthält. Im Ruhe- oder Wartezustand außerhalb des Telegramms T wird vom Master ständig der Bittakt bt über den Eindraht-Bus gesendet. Das Ende des Bittaktes bt und der Beginn der Daten des Adreßteils ad bilden die Startinformation si. An den Adreßteil ad schließen sich wie in Fig. 1 die erste Marke m1, das Synchronisierbit sb und der in der Länge variable Datenteil dt an. Anders als in Fig. 1, in der nun die Endinformation oi folgt, zeigt eine zweite Marke m2 an, daß das Telegramm T noch nicht zu Ende ist. Es folgt ein ebenfalls in der Länge variabler Testteil tx, eine dritte Marke m3, ein Blockierbit bb und schließlich die Endinformation oi. Der Testteil tx dient der Überprüfung des Adreßteils ad und/oder Datenteils dt. Bei der Feststellung eines Fehlers wird der logische Zustand des Blockierbits bb geändert, wodurch die Ungültigkeit des gesamten übermittelten Telegramms T ausgelöst wird.

Der Adreßteil ad - auch im Format von Fig. 1 - kann in eine Device-Adresse da, eine interne Adresse ia und in eine Operations-Adresse oa aufgespalten sein. Mittels der Device-Adresse da werden unterschiedliche Slaves angesprochen. Mittels der internen Adresse ia kann man innerhalb eines Slaves auf unterschiedliche Datenquellen oder Datensenken zugreifen. Die Operations-Adresse oa bestimmt, welche Operation im einzelnen der Slave ausführen soll. Ist der Slave beispielsweise ein Schreib-Lesespeicher, dann kann dieser Speicher mittels der speziellen Operations-Adresse oa für den Schreib- oder Lesebetrieb vorbereitet werden.

Das Synchronisierbit sb in Fig. 1 und Fig. 2 dient dazu, dem Master anzuzueigen, daß der Slave zur Übernahme des angefangenen Telegramms T momentan nicht bereit ist. Der Master gibt daraufhin den Eindraht-Bus durch Senden der Endinformation oi wieder frei und sendet das Telegramm T nach einer Wartezeit gegebenenfalls noch einmal.

Wenn mehrere Master an den Eindraht-Bus angeschlossen sind, dann wird durch das Erkennen der Startinformation si die Aussendung eigener Telegramme T solange unterdrückt, bis die Endinformation oi auf dem Eindraht-Bus erscheint. Beginnen zufälligerweise gleichzeitig mehrere Master mit dem Senden von Telegrammen T, dann "verabschieden" sich nacheinander diejenigen Master, die mittels eines Ausgangsfehlerdetektors af (vgl. Fig. 5) einen Unterschied zwischen dem jeweils gesendeten und empfangenen Bit feststellen. Dies ist dadurch möglich, daß der Eindraht-Bus als "verdrahtete-ODER"-Verknüpfung ausgebildet ist. Hierbei ist einer der beiden Schaltzustände, in der Regel der L-Schaltzustand, bereits durch einen einzigen Master oder einen einzigen Slave zu erzwingen. Auf gleiche Weise wird der logische Zustand des Synchronisierbits sb und des Blockkierbits bb innerhalb der jeweiligen Bitperiode verändert. Die Prioritätssteuerung des Eindraht-Busses erfolgt somit auf einfache Weise durch den Ausgangsfehlerdetektor af.

Die "verdrahdete-ODER"-Verknüpfung und der hochohmige Zustand (= Tristate-Zustand) können auch miteinander kombiniert werden. Dann befinden sich alle Master und Slaves bis auf die jeweils aktiven im hochohmigen Tristate-Zustand.

Wenn der aktive Master nach der Aussendung seines Telegramms im Wartezustand seinen Bittakt bt aussendet, dann prägt er allen anderen Mastern und Slaves seinen Bittakt so lange auf, bis sich ein neuer Master durch eine Startinformation si zu erkennen gibt und fortan die Taktführung übernimmt. In welchem Tastverhältnis der Bittakt bt während des Wartezustandes gesendet wird ist davon abhängig, wie die Erkennung des ersten Adreßbits erfolgt. Eventuell muß vor dem ersten Adreßbit eine logische "0", "1" oder eine Marke als Startinformation si eingeschoben werden.

Fig. 3 zeigt drei Master M, M1, M2 und vier Slaves S, S1, S2, S3, die über einen Eindraht-Bus B zusammengeschaltet sind. Dabei kann jeweils ein Master an einen Slave seriell über den Eindraht-Bus B Daten senden oder von dort abrufen. Die einzelnen Slaves sind dabei durch unterschiedliche Device-Adressen da unterscheidbar. Falls Daten auch zwischen den Mastern austauschbar sein sollen, müssen die ansprechbaren Master wie ein Slave adressier- und ansprechbar sein. Ein Slave S3 ist als Dreibeinelement dargestellt, wobei zwei Anschlüsse für die Versorgungsspannungen vorgesehen sind und der dritte Anschluß mit dem Eindraht-Bus B verbunden ist. Ein derartiges Bauelement ist beispielsweise ein elektronischer Temperaturfühler, dessen digitalisierter Temperaturwert über den Eindraht-Bus abgerufen wird.

In Fig. 4 ist schematisch als Ausschnitt der Zeitverlauf eines Telegramms T mit zugehörigem Bittakt bt dargestellt. Vom Bittakt bt sind dabei lediglich die Taktperioden markiert, weil der eigentliche Signalverlauf, also das Tastverhältnis, an sich beliebig ist.

Unter dem Bittakt bt ist der Signalverlauf einiger Bittaktperioden des Telegramms T dargestellt. Zu Beginn jeder Bittaktperiode findet ein Übergang vom L- in den H-Schaltzustand statt. Die negative Schaltflanke erfolgt zu bestimmten Zeiten während der Bittaktperiode und definiert innerhalb des Bittaktes unterschiedlich lange H- und L-Schaltzustände. Ein erstes bzw. zweites H/L-Tastverhältnis, das kleiner bzw. größer als 1 ist, definiert eine logische "0" bzw. "1". Ein drittes H/L-Tastverhältnis definiert die Marke mi und eventuell auch den Bittakt bt während des Wartezustandes.

Der Übergang vom Bittakt bt oder von den Marken mi auf ein Datenbit "0" oder "1" kennzeichnet die Startinformation si. Die Endinformation oi wird erkannt, wenn hintereinander mindestens zwei Marken mi gesendet werden. Das Synchronisierbit sb und das Blockierbit bb zeichnen sich dadurch aus, daß vom Master ein erster logischer Zustand, z.B. eine "1", gesendet wird. Wenn der Slave zur weiteren Abwicklung des Telegramms T bereit ist, dann behält er den logischen Zustand des Synchronisierbits sb bzw. des Blockierbits bb bei.

Wenn der Slave zur weiteren Abwicklung des Telegramms T indessen nicht bereit ist, dann löst er durch Umcodierung des Synchronisierbits in einen zweiten logischen Zustand, z.B. eine "0", im Master M ein Nichtbereitschaftssignal aus. Auf ähnliche Weise löst bei einem erkannten Fehler der Slave durch Umcodierung des Blockierbits bb in den zweiten logischen Zustand, z.B. "0", im Master M ein Ungültigkeitssignal aus. In beiden Fällen ist das gesendete Telegramm unwirksam, so daß es später wiederholt werden muß. Diese Zuweisung gilt für die "verdrahtete-ODER"-Verknüpfung, bei der sich eine "0" vor der "1" durchsetzt.

Die erforderlichen Tastverhältnisse lassen sich am einfachsten von einem internen Systemtakt cl oder Hilfstakt ht (vgl. Fig. 5 und Fig. 6) ableiten, dessen Frequenz mindestens das Doppelte des Bittaktes bt beträgt. Die positiven Flanken des Telegramms T liefern den genauen Bittakt bt, an den sich in den Slaves und gegebenenfalls in den anderen Mastern alle Hilfstakt- und Taktgeneratoren phasengenau mit Hilfe von Phasenregelschleifen ankoppeln.

In Fig. 5 sind schematisch die einzelnen Funktionsgruppen eines Masters M dargestellt. Da die Funktionsgruppen für den Fachmann geläufige Schaltungen darstellen, erübrigt sich der besseren Übersichtlichkeit wegen eine ausführlichere Darstellung und Beschreibung. Den Zeitablauf und die Steuerung der einzelnen Funktionsgruppen übernimmt eine Master-Steuereinrichtung st, die aus den einzelnen Funktionsgruppen Steuersignale empfängt oder zu deren Aktivierung Steuersignale sendet.

Eine Ein-Ausgabestufe io ist mit ihrer Ausgangsklemme k mit dem Eindraht-Bus B verbunden und erzeugt die einzelnen H- und L-Schaltsignale im Sendebetrieb. Im Empfangsbetrieb werden die Schaltzustände des Eindraht-Busses B abgefühlt und einen Decodierer dec zugeführt. Eine eventuell vorgesehene Umsteuerung der Ein-Ausgabestufe io in einen hochohmigen Tristate-Zustand erfolgt durch ein Signal auf der gestrichelt dargestellten Steuerleitung f. Dem Decodierer dec für die empfangenen Signale entspricht der Codierer cod für die zu sendenden Signale - er steuert das Tastverhältnis der gesendeten Bits. Der Decodierer dec decodiert die empfangenen Signale bezüglich ihres Tastverhältnisses. Die entsprechenden Fenster werden durch eine Tastverhältnissteuerung tr, die mit den Steuereingängen des Codierers und Decodierers verbunden ist, gebildet.

Die Tastverhältnissteuerung tr steuert ferner einen Markengenerator mg, der über die Ein-Ausgabestufe io direkt die Marke mi für den Eindraht-Bus B bildet. Die seriellen Eingangsdaten für den Codierer cod stammen entweder aus einem Adressengenerator ag, einer Datenquelle dq oder einem Testdatengenerator tg. Die seriellen Ausgangsdaten des Decodierers dec werden entweder einer Datensenke ds, dem Testdatengenerator tg oder einem Stoppsignaldetektor sd zugeführt, dessen Vergleichseingang vom Markengenerator mg gespeist ist.

Stellt der Stoppsignaldetektor sd einen wesentlichen Unterschied im Tastverhältnis zwischen den beiden zugeführten Signalen fest, dann signalisiert er der Master-Steuereinrichtung st das Erkennen des Nichtbereitschafts- oder des Ungültigkeitssignals. Ähnlich arbeitet ein Fehlerdetektor fd, der an einem Eingang mit den Ausgangsdaten des Testdatengenerators tg und am anderen Eingang mit den Ausgangsdaten des Decodierers dec gespeist ist. Die Testdaten sind dabei aus den Adreßdaten und/oder den gesendeten oder empfangenen Daten gebildet, die dem Testdatengenerator zur Verrechnung zugeführt sind. Findet im Slave S eine gleiche Verrechnung der Daten zu Testdaten statt, dann wird über einen Vergleich der eigenen mit den empfangenen Testdaten mittels des Fehlerdetektors fd eine fehlerhafte Übertragung erkannt.

Eine andere Erkennung der Nichtbereitschafts- und Ungültigkeitssignale ermöglicht ein Ausgangsfehlerdetektor af, dessen erster Dateneingang an den Ausgang des Codierers cod und dessen zweiter Dateneingang an die Ausgangsklemme k der Ein-Ausgabestufe io angeschlossen ist. Sowie das Tastverhältnis an den beiden Abgriffen der Ein-Ausgabestufe io einen Unterschied zeigt, wird erkannt, daß ein Slave S das Synchronisier- oder Blockierbit sb, bb umcodiert hat.

Als separater Block ist in Fig. 5 ein Taktgenerator tc dargestellt, der einen internen Systemtakt c1 erzeugt und dessen nicht dargestellte interne Phasenregelschleife an den Eindraht-Bus B angekoppelt oder von einem externen Systemtakt cl′ gespeist ist. Die Versorgung des Eindraht-Busses B während des Wartezustandes mit dem Bittakt bt erfolgt durch den Markengenerator mg.

Das Vorhandensein sämtlicher Funktionsgruppen im Master M ist für reduzierte Betriebsaufgaben nicht erforderlich. Sind beispielsweise nur Daten abzurufen, dann entfällt die Datenquelle dq. Der aufwendige Testdatengenerator tg, der auch im Slave erforderlich ist, entfällt, wenn die erforderliche Datenübertragungssicherheit gering oder auf andere Weise erreichbar ist, beispielsweise durch Wiederholung. Die Abwicklung des Datenformats nach Fig. 1 erfordert selbstverständlich ebenfalls keinen Testdatengenerator.

In Fig. 6 ist ein Slave S mit seinen einzelnen Funktionsblöcken schematisch dargestellt. Die funktionale Ähnlichkeit zum Master M kommt dabei auch in der zeichnerischen Darstellung zum Ausdruck. Eine Ein-Ausgabestufe io′ ist mit ihrer Ausgangsklemme k′ an den Eindraht-Bus B angeschlossen. Der interne Datenausgang dieser Ein-Ausgabestufe ist an einen Decodierer dec′ und der interne Dateneingang an den Ausgang eines Codierers cod′ angeschlossen, der von einer Datenquelle dq′ gespeist ist. Der Ausgang des Decodierers dec′ ist auf eine Datensenke ds′, einen Adressenkomparator al mit einer Adreßlängen-Überprüfungseinrichtung ue und einen Markendetektor md geführt.

Die Fenster für die verschiedenen Tastverhältnisse im Codierer cod′ und Decodierer dec′ sind von einer Tastverhältnissteuerung tr′ gesteuert. Diese steuert auch das Tastverhältnis für das Nichtbereitschafts- und Ungültigkeitssignal, die in einem Stoppsignalgeber sg gebildet werden und direkt der Ein-Ausgabestufe io′ zugeführt sind. Dort wird der zweite logische Zustand, also "0", dem jeweiligen Synchronisierbit sb oder Blockierbit bb zwangsweise aufgeprägt.

Das Vorhandensein eines Bittaktes bt auf dem Eindraht-Bus B während des Wartezustandes wird durch einen Bittaktdetektor bd erkannt, der bei Nichtvorhandensein des Bittaktes über einen Betriebsartumschalter bu, der auf die Slave-Steuereinrichtung st′ einwirkt, einen stromsparenden Zustand auslöst. Ferner ist an dem Bittaktdetektor bd ein Hilfstaktgenerator hg angekoppelt, dessen Ausgangssignal ein Hilfstakt ht mit einem einfachen ganzzahligen Frequenzverhältnis zum Bittakt bt ist.

Wenn der Slave S in CMOS-Technik ausgeführt ist, dann muß lediglich der interne Takt abgeschalten werden, um die Schaltung in einen stromlosen Zustand zu bringen.

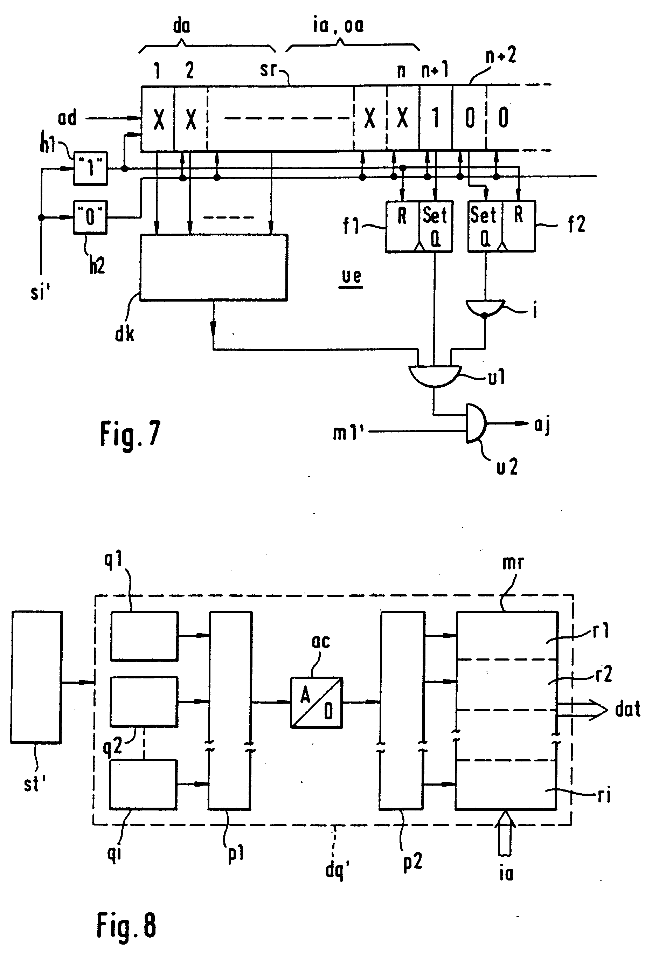

Im Adressenkomparator al, dem Adressen beliebiger Länge zugeführt werden können, befindet sich die Adreßlängen-Überprüfungseinrichtung ue. Bei Nichtübereinstimmung der Adreßteile ad (oder der Device-Adresse da) und der Adreßlänge unterbleibt die Aussendung eines Übernahmesignals aj (vgl. Fig. 7) an die Slave-Steuereinrichtung st′. Somit kann eine zufällige Adressenübereinstimmung in unterschiedlich langen Adressen nicht zur Übernahme führen.

Fig. 7 zeigt schematisch als Blockschaltbild ein Ausführungsbeispiel einer Adreßlängen-Überprüfungseinrichtung ue. Sie erfordert nur sehr wenig zusätzliche Bauelemente und besteht im wesentlichen aus dem sowieso vorhandenen Schieberegister sr, in dem die seriell zugeführten Daten des Adreßteils ad gespeichert sind.

Das Schieberegister sr enthält zur Adreßlängenüberprüfung mindestens n+1 Schieberegisterstufen, wobei n die Stellenanzahl der zu erkennenden Adresse ist. Mittels eines Startsignals si′, das aus der Startinformation si abgeleitet ist, werden spätestens zu Beginn des Einschreibvorgangs alle Schieberegisterstufen bis auf die erste auf "0" gesetzt; die erste Schieberegisterstufe wird auf "1" gesetzt. Das Setzen der einzelnen Schieberegisterstufen erfolgt über ihre Setz- und Rücksetzeingänge oder über ihre Dateneingänge, denen von einem ersten oder zweiten Speicher h1, h2 jeweils entweder eine "1" oder eine "0" zugeführt wird.

Mit dem Beginn des Adreßteils ad beginnt das serielle Einlesen der Adressen in die einzelnen Schieberegisterstufen, das so lange andauert, bis die erste Marke m1 den Schiebevorgang beendet. Bei Übereinstimmung der Adressenlänge muß die gesetzte "1" der ersten Schieberegisterstufe in der Zwischenzeit bis in die (n+1)-te Schieberegisterstufe weitergeschoben worden sein. Als Kriterium für die richtigen Adreßenlänge dient die Überprüfung, daß eine erste "1" in der (n+1)-ten Schieberegisterstufe angekommen ist, und daß diese erste "1" auch dort noch vorhanden ist.

In dem dargestellten Ausführungsbeispiel nach Fig. 7 umfaßt die Schaltung für diese Überprüfung ein erstes und zweites RS-Flipflop f1, f2, zwei weitere Schieberegisterstufen n+1 und n+2, ein Inverter i und schließlich ein erstes und zweites UND-Gatter u1, u2. Mit dem Startsignal si′ werden zu Beginn des Adreßlängen-Meßintervalls die Rücksetzeingänge R der beiden RS-Flipflops f1, f2 aktiviert. Der Setzeingang Set des ersten bzw. zweiten RS-Flipflops f1, f2 ist mit dem Ausgang der (n+1)-ten bzw. (n+2)-ten Schieberegisterstufe verbunden. Der Q-Ausgang des ersten bzw. zweiten RS-Flipflops f1, f2 ist mit einem Eingang des ersten UND-Gatters u1 direkt bzw. mit einem zweiten Eingang über den Inverter i verbunden. Ein weiterer Eingang des ersten UND-Gatters ist mit dem Ausgang eines Device-Adressenkomparators dk verbunden, dessen Paralleleingang von denjenigen Schieberegisterstufen gespeist ist, die die Device-Adresse da enthalten. Der Device-Adressenkomparator enthält die zu erkennende Device-Adresse als Hardware- oder Software-Information.

Das Erkennen der richtigen Adressenlänge ergibt sich aus der Gültigkeitsüberprüfung folgender Schaltzustände:
1. Der Q-Ausgang des ersten RS-Flipflops f1 muß eine "1" aufweisen, das heißt, daß im Meßintervall mindestens einmal eine "1" in der (n+1)-ten Schieberegisterstufe war.
2. Der Q-Ausgang des zweiten RS-Flipflops f2 muß eine "0" aufweisen, das heißt, daß im Meßintervall bisher keine "1" in der (n+2)-ten Schieberegisterstufe war. Andernfalls wäre das zweite RS-Flipflop f2 in den anderen Zustand gekippt worden - dies wäre durch eine "1" am Q-Ausgang erkennbar.
3. Schließlich muß der Ausgang des Device-Adressenkomparators dk anzeigen, daß eine Übereinstimmung aller Stellen im Bereich der Device-Adresse da vorhanden ist.
4. Da die vorausgehenden Prüfungen 1 bis 3 erst dann das Übernahmesignal aj auslösen sollen, wenn die erste Marke m1 das Ende des Adreßteils ad signalisiert hat, wird die Wirksamkeit dieser Überprüfung von der ersten Marke m1 abhängig gemacht, indem ein von ihr abgeleitetes Signal m1′ und das Ausgangssignal des ersten UND-Gatters u1 jeweils auf einen Eingang des zweiten UND-Gatters u2 geschaltet werden. Der Ausgang dieses UND-Gatters liefert das gewünschte Übernahmesignal aj.

Die Überprüfung des Schaltzustandes der (n+1)-ten Schieberegisterstufe kann natürlich auch auf andere Weise erfolgen. Beispielsweise kann überprüft werden, ob das erste RS-Flipflop f1 erstmalig mit dem letzten Bittakt gekippt ist oder schon früher.

In Fig. 8 ist schematisch als Blockschaltbild eine Mehrfachdatenquelle dargestellt, die als Datenquelle dq′ in einem Slave dient. Die eigentliche Datenquelle besteht dabei aus mehreren Analogsignalquellen q1, q2, qi, die von einem ersten Multiplexer p1 nacheinander abgetastet und einem Analog-Digitalumsetzer ac zugeführt werden. Dessen Ausgang speist den Eingang eines zweiten Multiplexers p2, der die Daten in die Speicherzellen r1, r2, ri einer Speichereinrichtung mr einschreibt. Das Auslesen der Daten dat der einzelnen Speicherzellen erfolgt durch Ansteuerung der jeweiligen Speicherzelle mittels der internen Adresse ia. Wenn in der Datenquelle dq′ nur eine einzige Analogsignalquelle q1 vorhanden ist, dann entfällt natürlich der erste und zweite Multiplexer p1, p2 und die Speichereinrichtung mr benötigt nur eine einzige Speicherzelle r1, wobei die oben beschriebene Adressierung über die interne Adresse ia ebenfalls entfällt.

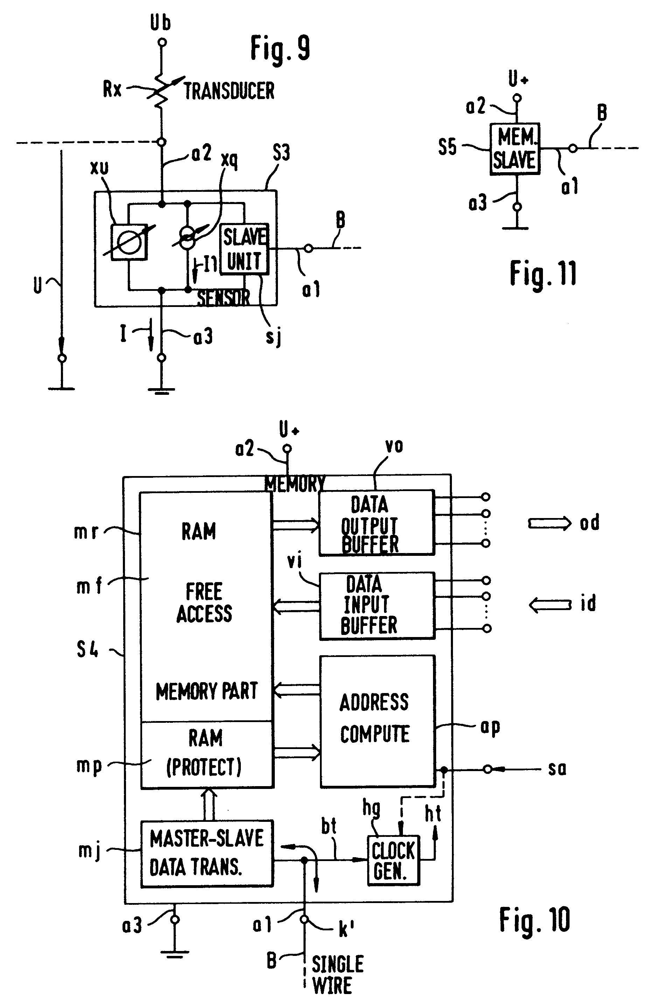

Eine besonders vorteilhafte Anwendung von derartigen Master-Slave-Datenübertragungssystemen, in denen die Slaves als Datenquellen dq′ eine einfache oder eine mehrfache Analogsignalquelle enthalten, findet sich in allen Arten von Sensorbauelementen für die unterschiedlichsten Meßaufgaben. Ihr Anschluß über den Eindraht-Bus B ermöglicht, daß eine Vielzahl von gleichen oder unterschiedlichen Sensorbauelementen über eine einzige Eindraht-Verbindung abgefragt werden können. Zusätzlich läßt sich die erforderliche Anzahl der Anschlußbeine der Sensorbauelemente im Extremfall bis auf drei Anschlüsse verringern, vgl. Fig. 3 und Fig. 9. Der erste Anschluß a1 dient der Verbindung mit dem Eindraht-Bus B. Der zweite und der dritte Anschluß a2, a3, dienen der Verbindung mit der positiven und negativen Versorgungsspannung.

Fig. 9 zeigt schematisch ein dreibeiniges Sensorbauelement S3, das beispielsweise an einen ohmschen Positions- oder Drehwinkelgeber Rx angeschlossen ist. Dessen unbekannter Widerstand kann dadurch bestimmt werden, daß über den Eindraht-Bus B als Daten die Spannung U zwischen dem zweiten und dritten Anschlußbein a2, a3 und der Querstrom I abgerufen werden. Aus den übermittelten Werten U, I und der bekannten Versorgungsspannung Ub läßt sich im Master M mit Hilfe eines an die Datensenke ds im Master M angeschlossenen Rechenwerkes der unbekannte Widerstandswert Rx bestimmen.

Bei unbekannter Versorgungsspannung Ub muß durch interne Maßnahmen im Sensor S3 der unbekannte Widerstandswert des Positionsgebers Rx aus zwei unterschiedlichen Meßungen bestimmt werden, wobei entweder die Spannung U oder der Querstrom I durch interne Maßnahmen im Sensor S3 umgeschaltet werden muß.

Wenn es auf den absoluten Widerstandswert des Positionsgebers Rx nicht ankommt und eine Relativmessung ausreichend ist, dann genügt es, wenn im Sensor S3 ein zugeschalteter Strom I1 in festen, aber vorgegebenen Stufen veränderbar ist oder einfach verdoppelt wird. Aus den gemessenen Spannungswerten U läßt sich dann die relative Widerstandsänderung des Positionsgebers Rx ermitteln, ohne den eigentlichen Wert des Querstromes I zu kennen. Dies reicht meistens aus, um eine bestimmte Position oder einen vorgegebenen Drehwinkel usw. wieder einzustellen.

Im einzelnen enthält die schematische Darstellung nach Fig. 9 zusätzlich zu den bereits näher beschriebenen Funktionsgruppen sj des Slaves eine Stromquellen-Umschalteinrichtung xq und/oder eine Spannungsquellen-Umschalteinrichtung xu. Als Analogsignalquelle dient eine Einrichtung zur Spannungsmessung zwischen dem zweiten und dritten Anschlußbein a2, a3, die in Fig. 9 jedoch nicht dargestellt ist.

In Fig. 10 ist eine andere vorteilhafte Anwendung für ein derartiges Master-Slave-Datenübertragungssystem mit einem Eindraht-Bus B dargestellt, nämlich ein Speicherbauelement S4 mit "eingebauter Intelligenz". Die Speichereinrichtung mr enthält dabei in einem geschützten Speicherbereich mp ein Adressenrechenprogramm, das über ein Master-Slave-Datenübertragungssystem mj nach der Erfindung in diesen Speicherbereich eingelesen wird. Die Ausgangsklemme k′ des Slaves ist dabei das erste Anschlußbein a1 des Speicherbauelements, das an den Eindraht-Bus B angeschlossen ist. Von dort empfängt das Speicherbauelement S4 in einer Programmierungsphase die Telegramme T, die die einzelnen Schritte des Adressenrechenprogramms enthalten. In der Regel handelt es sich dabei um einfache, sich zyklisch wiederholende Rechenprogramme, wobei die einzelnen Adressen in einer Adressen-Recheneinrichtung ap ermittelt werden. Der frei zugängliche Bereich mf der Speichereinrichtung mr ist mit einer Daten-Ausgangsstufe vo und einer Daten-Eingangsstufe vi verbunden. Für die Ausgangs- bzw. Eingangsdaten od, id stehen dabei jeweils mindestens ein Satz Anschlußbeine zur Verfügung, über die eine parallele Abwicklung des Datentransfers ermöglicht wird.

Die interne Synchronisierung erfolgt mittels eines Hilfstaktes ht, der durch einen Hilfstaktgenerator hg gebildet wird, der entweder auf den Bittakt bt eingerastet ist oder auf ein Abrufsignal sa. Mit dem externen Abrufsignal sa wird auch der Datenzyklus synchronisiert, dessen Periode ein einfaches ganzzahliges Vielfaches des Hilfstaktes ht oder des Bittaktes bt ist. Der Synchronismus zwischen den verschiedenen Takten wird auf übliche Weise mittels einer Phasenregelschleife im Hilfstaktgenerator hg erreicht.

Ein derartiges Speicherbauelement S4 mit eingebauter Adressenberechnung ist besonders dort von Vorteil, wo die Lese- und Schreibrate und die erforderliche Anzahl von Anschlußbeinen sehr hoch ist. Ein derartiger Speicher wird beispielsweise bei der Vollbildspeicherung von Farbfernsehsignalen zur Bildsignalverarbeitung benötigt.

Der Gehäuseaufwand für vielbeinige Speicherbauelemente ist sehr hoch. Mit der Anzahl der Anschlußbeine nimmt in der Regel ihre Länge zu. Dies hat eine stärkere Verkopplung der Signale untereinander zur Folge, wodurch die Datenrate beschränkt wird. Die Erfindung schafft hier ganz wesentliche Abhilfe, weil derartige schnelle Bauelemente jetzt völlig ohne Adressenbeine auskommen.

Eine andere vorteilhafte Art von Speicherbauelementen S5 ist in Fig. 11 dargestellt. Es handelt sich hierbei um eine reine Dreibeinanordnung, deren erster Anschluß a1 mit dem Eindraht-Bus B verbunden ist, während das erste und dritte Anschlußbein mit der positiven bzw. negativen Versorgungsspannung verbunden sind. Derartige dreibeinige Speicherbauelemente S5 sind dort einsetzbar, wo eine geringe Datenübertragungsrate ausreicht. Die serielle Abwicklung des gesamten Datenübertragungsvorgangs kann dann ohne weiteres über den Eindraht-Bus B erfolgen. Über den internen Adreßteil ia im Telegramm T kann die jeweilige interne Adresse im Speicherbauelelement S5 angesteuert werden, die beispielsweise Abgleich- oder Einstelldaten für eine Bildröhre enthält. Werden die gespeicherten Daten im Betrieb nicht verändert, dann vereinfacht sich die Speichereinrichtung zu einem Nur-Lese-Speicher. Von Vorteil erweist sich bei diesen dreibeinigen Bauelementen, daß kostengünstige dreibeinige Transistorgehäuse verwendet werden können. Die langsame Abwicklung des Telegramms T auf dem Eindraht-Bus B erfordert zudem keinen eigentlichen Master M als Bauelement, sondern kann durch ein funktionsgleiches Abwicklungsprogramm, das als Software in einen handelsüblichen Mikroprozessor geladen wird, ersetzt werden.

## Patentansprüche

1. Master-Slave-Datenübertragungsverfahren mit
- einem Master (M), der über eine Ein-Ausgabestufe (io) an einen Slave (S) Daten sendet oder von dort abruft, wobei der Datentransfer über einen Eindraht-Bus (B) mittels eines Telegramms (T) erfolgt, das folgende Teilabschnitte enthält:
-- einen Adreßteil (ad), der die Datensenke oder Datenquelle im Slave (S) definiert,
-- einen Datenteil (dt), der entweder die gesendeten oder die abgerufenen Daten enthält und
-- eine Start- (si) und eine Endinformation (oi),
gekennzeichnet durch folgende Merkmale:
- an den Eindraht-Bus (B) ist mindestens ein Master (M, M1, M2) und mindestens ein Slave (S, S1, S2, S3) mit seiner zugehörigen Ein-Ausgabestufe (io, io′) angeschlossen,
- das Adreßende des in der Länge von Telegramm (T) zu Telegramm (T) beliebig vorgebbaren Adreßteils (ad) ist durch eine erste Marke (m1) definiert,
- der jeweils anzusprechende Slave (S) enthält eine Adreßlängen-Überprüfungseinrichtung (ue),
- die Länge des Datenteils (dt) ist von Telegramm (T) zu Telegramm (T) beliebig vorgebbar,
- mindestens während der Übertragungszeit des Telegramms (T) wird ein Bittakt (bt) dem Telegramm (T) überlagert,
- die Startinformation (si) löst für die Dauer des Telegramms (T) eine Sperrung der anderen Master (M1, M2) aus und
- ein Ausgangsfehlerdetektor (af) dient der Prioritätssteuerung und verhindert den konkurrierenden Betrieb mehrerer Master.

2. Datenübertragungsverfahren nach Anspruch 1, gekennzeichnet durch folgende Merkmale:
- im Telegramm (T) ist nach der ersten Marke (m1) ein Synchronisierbit (sb) eingefügt,
- mittels der Beibehaltung eines ersten logischen Zustandes ("1") des Synchronisierbits (sb) wird dem Master (M) vom Slave (S) angezeigt, daß das Telegramm (T) weiter abzuwickeln ist, und
- mittels eines Nichtbereitschaftssignals, das durch Umcodierung des Synchronisierbits (sb) in einen zweiten logischen Zustand ("0") gebildet wird, zeigt der Slave (S) dem Master (M) an, daß der Slave zur Abwicklung des Telegramms (T) nicht bereit ist, und
- der Master (M) beendet die Sperrung des Eindraht-Busses (B) für die anderen Master (M1, M2), indem er die Endinformation (oi) sendet.

3. Datenübertragungsverfahren nach einem der Ansprüche 1 bis 2, dadurch gekennzeichnet, daß der Adreßteil (ad) eine Device-Adresse (da) und/oder eine interne Adresse (ia) und/oder eine Operations-Adresse (oa) enthält.

4. Datenübertragungsverfahren nach einem der Ansprüche 1 bis 3, dadurch gekennzeichnet, daß der Datenteil (dt) Programmbefehle enthält, die unter der jeweiligen internen Adresse (ia) einzuschreiben sind.

5. Datenübertragungsverfahren nach einem der Ansprüche 1 bis 4, gekennzeichnet durch folgende Merkmale:
- zwischen den Datenteil (dt) und die Endinformation (oi) ist in folgender Reihenfolge eine zweite Marke (m2), ein in der Länge variabler Testteil (tx) zur Überprüfung des Daten- und/oder Adreßteils (dt, ad), eine dritte Marke (m3) und schließlich ein Blockierbit (bb) eingefügt, und
- bei einem erkannten Fehler löst der Slave (S) durch Umcodierung des Blockierbits (bb) ein Ungültigkeitssignal aus, welches das gesendete Telegramm (T) unwirksam macht.

6. Datenübertragungsverfahren nach einem der Ansprüche 1 bis 5, gekennzeichnet durch folgende Merkmale:
- mittels einer Übertragung des Bittaktes (bt) auf dem Eindraht-Bus (B) außerhalb der Telegramme (T) werden die angeschlossenen Slaves (S, S1, S2, S3) in den Aktivzustand versetzt und
- mittels der Unterdrückung des Bittaktes (bt) auf dem Eindraht-Bus (B) wird mindestens einer der Slaves (S, S1, S2, S3) in einen stromsparenden Wartezustand versetzt.

7. Datenübertragungsverfahren nach einem der Ansprüche 1 bis 6, gekennzeichnet durch folgende Merkmale:
- der logische Zustand ("1", "0") der Bits im Telegramm (T) ist durch ein erstes oder zweites zeitliches Tastverhältnis zwischen einem ersten und einem zweiten Schaltzustand (H, L) des Eindraht-Buses definiert, wobei der Übergang vom zweiten (L) in den ersten Schaltzustand (H) den Beginn der jeweiligen Bittaktperiode definiert und
- die erste, zweite und dritte Marke (m1, m2, m3) und die Bits der Endinformation (oi) sind durch ein drittes Tastverhältnis zwischen dem ersten und zweiten Schaltzustand (H, L) definiert, das insbesonders ein zeitliches Verhältnis von 1: 1 aufweist.

8. Datenübertragungsverfahren nach Anspruch 7, gekennzeichnet durch folgende Merkmale:
- das Synchronisierbit (sb) und das Blockierbit (bb) weisen jeweils einen ersten oder einen zweiten logischen Zustand ("1", "0") auf, der durch das erste oder zweite Tastverhältnis zwischen dem ersten und zweiten Schaltzustand (H, L) definiert ist,
- der erste logische Zustand ("1") signalisiert die ungestörte Abwicklung des Telegramms (T) und
- der zweite logische Zustand ("0") signalisiert die Unterbrechung oder die Ungültigkeit des Telegramms (T).

9. Datenübertragungsverfahren nach Anspruch 8, gekennzeichnet durch folgende Merkmale:
- der Eindraht-Bus (B) bildet mit den Ein-Ausgabestufen (io, io′) der angeschlossenen Master (M, M1, M2) und Slaves (S, S1, S2, S3) eine "verdrahtete-ODER"-Verknüpfung, wobei einer der Schaltzustände (L) des Eindraht-Buses bereits durch einen einzigen Master oder einen einzigen Slave zu erzwingen ist, und
- beim zweiten Tastverhältnis ist die Zeitdauer des erzwungenen Schaltzustandes (L) gegenüber dem ersten Tastverhältnis verlängert.

10. Datenübertragungsverfahren nach einem der Ansprüche 1 bis 9, gekennzeichnet durch folqende Merkmale:
- der empfangene Adreßteil (ad) wird in einen Schieberegister (sv) der Adreßlängen-Überprüfungseinrichtung (ue) gespeichert,
- dieses Schieberegister (sr) enthält mindestens n+1 Schieberegisterstufen, wobei n die Stellenanzahl der zu erkennenden Adresse ist,
- spätestens durch die Startinformation (si) wird die erste Schieberegisterstufe auf "1" gesetzt und die anderen Schieberegisterstufen auf "0", und
- die erste Marke (m1) löst die Adreßlängen-Überprüfung aus, wobei eine Auswerteschaltung überprüft, ob in der (n+1)-ten Schieberegisterstufe erstmalig vom Startzeitpunkt aus gerechnet eine "1" angekommen ist und wenn ja, ob diese dort auch noch vorhanden ist.

11. Sensorbauelement in einem Master-Slave-Datenübertragungssystem mit
- einem Master (M), der über eine Ein-Ausgabestufe (io) an einen Slave (S) Daten sendet oder von dort abruft, wobei der Datentransfer über einen Eindraht-Bus (B) mittels eines Telegramms (T) erfolgt, das folgende Teilabschnitte enthält:
-- einen Adreßteil (ad), der die Datensenke oder Datenquelle im Slave (S) definiert,
-- einen Datenteil (dt), der entweder die gesendeten oder die abgerufenen Daten enthält und
-- eine Start- (si) und eine Endinformation (oi),
zur Durchführung des Verfahrens nach Anspruch 1, bei dem das Sensorbauelement (S3) den Slave (S) bildet und als Datenquelle (dq′) mindestens eine Analogsignalquelle (q) enthält, deren Signalwert mittels eines Analog-Digitalumsetzers (ac) digitalisiert und in einer Speicherzelle (ri) abgelegt ist, wobei der Inhalt dieser Speicherzelle (ri) vom Master (M) über den mit einem Anschlußbein des Sensorbauelements verbundenen Eindraht-Bus (B) abrufbar ist.

12. Sensorbauelement nach Anspruch 11, gekennzeichnet durch folgende Merkmale:
- mehrere Analogsignalquellen (q1, q2) in einem Slave (S, S3) sind über einen selbständigen ersten Multiplexer (p1) mit dem Analog-Digitalumsetzer (ac) verbunden,
- der Ausgang des Analog-Digitalumsetzers (ac) ist über einen zweiten Multiplexer (p2), der mit dem ersten Multiplexer (p1) synchronisiert ist, für jede Analogsignalquelle jeweils mit einer Speicherzelle (r1, r2, ri) verbunden, und
- der jeweiligen Speicherzelle (r1, r2, ri) ist eine Device- und eine interne Adresse (da, ia) zugeordnet, die vom Master (M) über den Eindraht-Bus (B) ansteuerbar sind.

13. Sensorbauelement nach Anspruch 11 oder 12, dadurch gekennzeichnet, daß es im Minimum drei elektrische Anschlußbeine aufweist, wobei das erste Anschlußbein (a1) an den Eindraht-Bus (B), das zweite Anschlußbein (a2) an eine positive und das dritte Anschlußbein (a3) an eine negative Versorgungsspannung anzuschließen sind.

14. Sensorbauelement nach Anspruch 13, dadurch gekennzeichnet, daß eine interne Meßeinrichtung für eine Spannung U oder einen Strom I zwischen dem zweiten und dritten Anschlußbein (a2, a3) vorhanden ist und über den Eindraht-Bus (B) die gemessene Spannung U oder der gemessene Strom I als Datenwort abzurufen sind.

15. Sensorbauelement nach Anspruch 14, gekennzeichnet durch folgende Merkmale:
- das Sensorbauelement enthält eine Stromquellen-Umschalteinrichtung (xu), die zwischen dem zweiten und dritten Anschlußbein (a2, a3) den Stromfluß I definiert in mindestens zwei Stufen ändert und/oder
- das Sensorbauelement weist eine Spannungsquellen-Umschalteinrichtung (xq) auf, die zwischen dem zweiten und dem dritten Anschlußbein (a2, a3) die Spannung U definiert in mindestens zwei Stufen ändert.

16. Speicherbauelement in einem Master-Slave-Datenübertragungssystem mit
- einem Master (M), der über eine Ein-Ausgabestufe (io) an einen Slave (S) Daten sendet oder von dort abruft, wobei der Datentransfer über einen Eindraht-Bus (B) mittels eines Telegramms (T) erfolgt, das folgende Teilabschnitte enthält:
-- einen Adreßteil (ad), der die Datensenke oder Datenquelle im Slave (S) definiert,
-- einen Datenteil (dt), der entweder die gesendeten oder die abgerufenen Daten enthält und
-- eine Start- (si) und eine Endinformation (oi),
zur Durchführung des Verfahrens nach Anspruch 1, bei dem das Speicherbauelement den Slave (S4, S5) bildet, der als Datenquelle oder Datensenke eine monolithisch integrierte Speichereinrichtung (mr) mit einer Vielzahl von Speicherzellen (ri) für Daten, die über die Device- und/oder interne Adresse (da, ia) abzurufen und/oder einzuschreiben sind, enthält, wobei die Umschaltung vom Lese- in den Schreibbetrieb von einer Operations-Adresse (oa) im Telegramm (T) gesteuert ist.

17. Speicherbauelement nach Anspruch 16, dadurch gekennzeichnet, daß der Slave (S4, S5) eine Adressen-Recheneinrichtung (ap) für vorgegebene Adressenzyklen enthält und daß nach Aufruf eines derartigen Adressenzyklus in den folgenden Telegrammen (T) der Adreßteil (ad) entfällt, wobei der Adreßzyklus Lese- und/oder Schreiboperationen enthält.

18. Speicherbauelement nach Anspruch 17, gekennzeichnet durch folgende Merkmale:
- die Adressen-Recheneinrichtung (ap) und die Speichereinrichtung (mr) sind Teile einer monolithisch integrierten Schaltung,
- das Programm für die Adressen-Recheneinrichtung (ap) ist in einem geschützten Bereich (mp) der Speichereinrichtung (mr) als Adressen-Rechenprogramm abgelegt und
- das Adressen-Rechenprogramm ist über den Eindraht-Bus (B) in die Speichereinrichtung geschrieben.

19. Speicherbauelement nach Anspruch 16, dadurch gekennzeichnet, daß es im Minimum drei elektrische Anschlußbeine enthält, wobei im Betriebszustand das erste Anschlußbein (a1) an den Eindraht-Bus (B), das zweite Anschlußbein (a2) an eine positive und das dritte Anschlußbein (a3) an eine negative Versorgungsspannung angeschlossen sind.

20. Speicherbauelement nach Anspruch 17, gekennzeichnet durch folgende Merkmale:
- das Speicherbauelement enthält keine Anschlußbeine für die Zuführung von Speicheradressen,
- ein Anschlußbein, das an den Eindraht-Bus (B) angeschlossen ist, dient der Zuführung des Adressen-Rechenprogramms während einer Programmierungsphase,
- die interne Neuberechnung einer Adresse in einer normalen Betriebsphase wird durch ein externes Abrufsignal (sa) im Telegramm (T) synchronisiert und
- die Ein- und/oder Ausgabe der Daten erfolgt für alle Stellen eines Datenwortes parallel über Daten-Anschlußbeine.

21. Speicherbauelement nach Anspruch 20, dadurch gekennzeichnet, daß Videodaten aus dem Fernsehsignalbereich in einem festen Adressenzyklus geschrieben und gelesen werden.

## Claims

1. Master-slave data transmission method using
- a master (M) which sends data to or reads data from a slave (S) via an input/output stage (io), with the data transfer taking place via a single-wire bus (B) by means of a message (T) containing the following sections:
-- an address part (ad) defining the data sink or data source in the slave (S),
-- a data part (dt) containing either the transmitted data or the read data, and
-- start (si) and end information (oi),
characterized by the following features:
- At least one master (M, M1, M2) and at least one slave (S, S1, S2, S3) are connected to the single-wire bus via their respective input/output stages (io, io′);
- the end of the address part (ad), whose length is arbitrarily predeterminable from message (T) to message (T), is defined by a first label (m1);
- the respective slave (S) to be addressed includes an address-length-checking device (ue);
- the length of the data part (dt) is arbitrarily pre-determinable from message (T) to message (T);
- at least during the transmission time of the message (T), a bit clock (bt) is superimposed on the message (T);
- the start information (si) initiates a lockout of the other masters (M1, M2) at least for the duration of the message (T), and
- an output error detector (af) is provided for priority control purposes and prevents contention between two or more masters.

2. A data transmission method as claimed in claim 1, characterized by the following features:
- In the message (T), a synchronizing bit (sb) is inserted after the first label (m1);
- by maintaining a first logic state ("1") of the synchronizing bit (sb), the slave (S) indicates to the master (M) that the processing of the message (T) is to continue, and
- by means of a not-ready signal which is formed by changing the synchronizing bit (sb) to a second logic state ("0"), the slave (S) indicates to the master (M) that it is not ready to process the message (T), and
- the master (M) relinquishes the single-wire bus (B) by sending the end information (oi).

3. A data transmission method as claimed in claim 1 or 2, characterized in that the address part (ad) contains a device address (da) and/or an internal address (ia) and/or an operation address (oa).

4. A data transmission method as claimed in any one of claims 1 to 3, characterized in that the data part (dt) contains program instructions to be written into locations specified by the respective internal address (ia).

5. A data transmission method as claimed in any one of claims 1 to 4, characterized by the following features:
- Between the data part (dt) and the end information (oi), there are inserted, in the following order, a second label (m2), a variable-length test part (tx) for checking the data part (dt) and/or the address part (ad), a third label (m3), and an inhibit bit (bb), and
- upon detection of an error, the slave (S), by changing the state of the inhibit bit (bb), triggers a cancel signal which cancels the transmitted message (T).

6. A data transmission method as claimed in any one of claims 1 to 5, characterized by the following features:
- By transmitting the bit clock (bt) on the single-wire bus (B) outside the messages (T), the connected slaves are placed in the active state, and
- by suppressing the bit clock (bt) on the single-wire bus (B), at least one of the slaves (S, S1, S2, S3) is placed in a current-saving wait state.

7. A data transmission method as claimed in any one of claims 1 to 6, characterized by the following features:
- The logic state ("1", "0") of the bits in the message (T) is defined by a first or second temporal ratio between a first state (H) and a second state (L) of the single-wire bus, with the transition from the second state (L) to the first (H) defining the beginning of the respective bit clock period, and
- the first, second, and third labels (m1, m2, m3) and the bits of the end information (oi) are defined by a third temporal ratio between the first and second states (H, L), particularly by a ratio of 1 : 1.

8. A data transmission method as claimed in claim 7, characterized by the following features:
- The synchronizing bit (sb) and the inhibit bit (bb) each have a first logic state ("1") or a second logic state ("0") which is defined by the first or second temporal ratio between the first and second states (H, L);
- the first logic state ("1") signals undisturbed processing of the message (T), and
- the second logic state ("0") signals interruption or invalidity of the message (T).

9. A data transmission method as claimed in claim 8, characterized by the following features:
- The single-wire bus (B) and the input/output stages (io, io′) of the connected masters (M, M1, M2) and slaves (S, S1, S2, S3) form a "wired OR", with one of the states (L) of the single-wire bus capable of being forced already by a single master or a single slave, and
- at the second temporal ratio, the duration of the forced state (L) is longer than at the first temporal ratio.

10. A data transmission method as claimed in any one of claims 1 to 9, characterized by the following features:
- The received address part (ad) is stored in a shift register (sr) of the address-length-checking device (ue);
- said shift register (sr) contains at least n+1 shift-register stages, where n is the number of bits of the address to be recognized;
- by the start information (si) at the latest, the first shift-register stage is set to "1" and the other shift-register stages are set to "0", and
- the first label (m1) initiates the address-length check, with an evaluating circuit checking whether a "1" has arrived in shift-register stage n+1 since the start time and, if so, whether it is still present there.

11. Sensor component in a master-slave data transmission system comprising
- a master (M) which sends data to or reads data from a slave (S) via an input/output stage (io), with the data transfer taking place via a single-wire bus (B) by means of a message (T) containing the following sections:
-- an address part (ad) defining the data sink or data source in the slave (S),
-- a data part (dt) containing either the transmitted data or the read data, and
-- start (si) and end information (oi),
for carrying out the method according to claim 1, wherein the sensor component (S3) forms the slave (S) and contains at least one analog-signal source (q) as a data source (dq′) whose signal value is digitized by means of an analog-to-digital converter (ac) and stored in a memory cell (ri), the contents of said memory cell (ri) being readable by the master (M) via the single-wire bus (B), which is connected to one lead of the sensor component.

12. A sensor component as claimed in claim 11, characterized by the following features:
- Two or more analog-signal sources (q1, q2) in a slave (S, S3) are connected via an independent first multiplexer (p1) to the analog-to-digital converter (ac);
- the output of the analog-to-digital converter (ac) is connected via a second multiplexer (p2), which is synchronized with the first multiplexer (p1), to a respective memory cell (r1, r2, ri) for each analog-signal source, and
the respective memory cell (r1, r2, ri) is assigned a device address (da) and an internal address (ia) which are selectable from the master (M) via the single-wire bus (B).

13. A sensor component as claimed in claim 11 or 12, characterized in that it has a minimum of three electric leads, with the first lead (a1) having to be connected to the single-wire bus (B), the second lead (a2) to a positive supply voltage, and the third lead (a3) to a negative supply voltage.

14. A sensor component as claimed in claim 13, characterized in that an internal measuring device is provided for measuring a voltage U or a current I between the second and third leads (a2, a3), and that the measured voltage U or the measured current I is readable as a data word via the single-wire bus (B).

15. A sensor component as claimed in claim 14, characterized by the following features:
- The sensor component includes a current source switching device (xu) which varies the current flow I between the second and third leads (a2, a3) in at least two defined steps, and/or
- the sensor component includes a voltage source switching device (xq) which varies the voltage U between the second and third leads (a2, a3) in at least two defined steps.

16. Memory component in a master-slave data transmission system comprising
- a master (M) which sends data to or reads data from a slave (S) via an input/output stage (io), with the data transfer taking place via a single-wire bus (B) by means of a message (T) containing the following sections:
-- an address part (ad) defining the data sink or data source in the slave (S),
-- a data part (dt) containing either the transmitted data or the read data, and
-- start (si) and end information (oi),
for carrying out the method according to claim 1, wherein the memory component forms the slave (S4, S5), in which the data source or data sink is a monolithic integrated memory device (mr) having a plurality of memory cells (ri) for data which can be read and/or written via the device address (da) and/or the internal address (ia), with switching from the read mode to the write mode being controlled by an operation address (oa) in the message (T).

17. A memory component as claimed in claim 16, characterized in that the slave (S4, S5) includes an address-computing device (ap) for predetermined address cycles, and that after such an address cycle has been called, the address part (ad) in the following meassages (T) is omitted, the address cycle containing read and/or write operations.

18. A memory component as claimed in claim 17, characterized by the following features:
- The address-computing device (ap) and the memory device (mr) are parts of a monolithic integrated circuit;
- the program for the address-computing device (ap) is stored as an address computation program in a protected area (mp) of the memory device (mr), and
- the address computation program is written into the memory device via the single-wire bus (B).

19. A memory component as claimed in claim 16, characterized in that it has a minimum of three electric leads, with the first lead (a1) connected to the single-wire bus (B), the second lead (a2) to a positive supply voltage, and the third lead (a3) to a negative supply voltage in the power-on condition.

20. A memory component as claimed in claim 17, characterized by the following features:
- The memory component has no leads for applying memory addresses;
- one of the leads which is connected to the single-wire bus (B) serves to apply the address computation program during a programming phase;
- the internal computation of an address in the normal operating phase is synchronized by an external read signal (sa), and
- all bits of a data word are input and/or output in parallel via data leads.

21. A memory component as claimed in claim 20, characterized in that video data from the television signal range is written and read in a fixed address cycle.

## Revendications

1. Système de transmission maître-esclave comportant
- un maître (M), qui envoie des données à un esclave (S) par l'intermédiaire d'un étage d'entrée/sortie (io) ou appelle des données à partir de l'esclave, le transfert de données s'effectuant par l'intermédiaire d'un bus à un fil (B) à l'aide d'un télégramme (T), qui contient les parties suivantes :
-- une partie d'adresse (ad), qui définit le récepteur de données ou la source de données dans l'esclave (S),
-- une partie de données (dt), qui contient les données émises ou les données appelées, et
-- une information de départ (si) et une information de fin (oi),
caractérisé par les caractéristiques suivantes :
- au moins un maître (M,M1,M2) et au moins un esclave (S,S1,S2,S3) est raccordé par son étage associé d'entrée/sortie (io, io′), au bus à un seul fil (B),
- l'extrémité de la partie d'adresse (ad), dont la longueur peut être prédéterminée de façon quelconque d'un télégramme (T) au suivant, est définie par une première marque (m1),
- l'esclave (S), qui doit respectivement répondre, contient un dispositif (ue) de contrôle de longueur d'adresse,
- la longueur de la partie de données (di) peut être prédéterminée de façon quelconque d'un télégramme (T) au suivant,
- une cadence binaire (bt) est superposée au télégramme (T) au moins pendant la durée de transmission de télégramme (T),
- l'information de départ (si) déclenche un blocage des autres maîtres (M1,M2) pendant la durée du télégramme (T), et
- un détecteur de défauts de sortie (af) est utilisé pour la commande de la priorité et empêche le fonctionnement simultané de plusieurs maîtres.

2. Procédé de transmission de données suivant la revendication 1, caractérisé par les caractéristiques suivantes :
- un bit de synchronisation (sb) est inséré dans le télégramme (T) après la première marque (m1),
- tout en conservant un premier état logique ("1") pour le bit de synchronisation (sb), l'esclave (S) indique au maître (M) que la transmission du télégramme (T) doit continuer à se dérouler, et
- l'esclave (S) indique au maître (M), à l'aide d'un signal de non-disponibilité, qui est formé par le transcodage du bit de synchronisation (sb) en un second état logique ("0"), que l'esclave n'est pas prêt pour le déroulement de la transmission du télégramme (T), et
- le maître (M) arrête le blocage du bus à un fil (B) pour les autres maîtres (M1,M2), par le fait qu'il émet une information de fin (oi).

3. Système de transmission de données selon l'une des revendications 1 et 2, caractérisé en ce que la partie d'adresse (ad) contient une adresse de dispositif (da) et/ou une adresse interne (ia) et/ou une adresse d'opération (oa).

4. Procédé de transmission de données selon l'une des revendications 1 à 3, caractérisé par le fait que la partie de données (dt) contient des instructions de programme, qui doivent être enregistrées à l'adresse interne respective (ia).

5. Procédé de transmission de données selon l'une des revendications 1 à 4, caractérisé par les caractéristiques suivantes :
- entre la partie de données (dt) et l'information de fin (oi) sont insérés, selon la séquence suivante, une seconde marque (m2), une partie de test (tx) de longueur variable pour le contrôle de la partie de données et/ou de la partie d'adresse (dt, ad), une troisième marque (m3) et enfin un bit de blocage (bb),
- dans le cas d'un défaut identifié, l'esclave (S) déclenche, au moyen d'un transcodage du bit de blocage (bb), un signal de non validité, qui rend inactif le télégramme émis (T).

6. Dispositif de transmission de données selon l'une des revendications 1 à 5, caractérisé par les caractéristiques suivantes :
- les esclaves raccordés (S,S1,S2,S3) sont placés à l'état activé au moyen d'une transmission de la cadence binaire (bt) au bus d'entrée à un fil (B), par l'intermédiaire d'une transmission de la cadence binaire (bt), et
- au moyen de la suppression de la cadence binaire (bt) dans le bus à un fil (B), au moins l'un des esclaves (S, S1,S2,S3) est placé dans un état d'attente réalisant une économie de courant.

7. Procédé de transmission de données selon l'une des revendications 1 à 6, caractérisé par les caractéristiques suivantes :
- l'état logique ("1", "0") des bits dans le télégramme (T), est défini par des premier et second taux d'impulsions temporels entre des premier et second états de commutation (H, L) du bus à un fil, le passage du second état (L) au premier état (H) définissant le début de la période respective de la cadence binaire, et
- les première, seconde et troisième marques (m1,m2,m3) et les bits de l'information (oi) sont définies par un troisième taux d'impulsions entre les premier et second états de commutation (H, L), qui notamment possède un rapport temporel égal à 1:1.

8. Procédé de transmission de données selon la revendication 7, caractérisé par les caractéristiques suivantes :
- le bit de synchronisation (sb) et le bit de blocage (bb) possèdent chacun un premier ou un second état logique ("1", "0"), qui est défini par le premier ou le second taux d'impulsions entre les premier et second états de commutation (H,L),
- le premier état logique ("1") signale le déroulement non perturbé du télégramme (T), et
- le second état logique ("0") signale l'interruption ou la non validité du télégramme (T).

9. Procédé de transmission de données suivant la revendication 8, caractérisé par les caractéristiques suivantes :
- le bus à un fil (B) forme avec un étage d'entrée/sortie (io, io′) des maîtres raccordés (M,M1,M2) et des esclaves raccordés (S,S1,S2,S3), une combinaison "OU câblée", l'un des états de commutation (L) du bus à un fil étant imposé déjà par un seul maître ou un seul esclave, et
- pour le second taux d'impulsions, la durée de l'état de commutation imposée (L) est prolongée par rapport au premier taux d'impulsions.

10. Procédé de transmission de données suivant l'une des revendications 1 à 9, caractérisé par les caractéristiques suivantes :
- la partie d'adresses reçue (ad) est mémorisée dans un registre à décalage (sr) du dispositif (ue) de contrôle de longueur d'adresses,
- ce registre à décalage (sr) contient au moins n+1 étages, n étant le nombre de chiffres de l'adresse à identifier,
- le premier étage du registre à décalage est positionné à "1" et les autres étages du registre à décalage sont positionnés à "0", au plus tard par l'information de départ (si), et
- la première marque (m1) déclenche le contrôle de longueur d'adresses, auquel cas un circuit d'évaluation vérifie si dans le (n+1)-ème étage du registre à décalage, on atteint un "1" pour la première fois calculé à partir de l'instant de démarrage, et, si la réponse est oui, si ce 1 est encore également présent dans cet étage.

11. Composant de capteur dans un système de transmission maître-esclave comportant
- un maître (M), qui envoie des données à un esclave (S) par l'intermédiaire d'un étage d'entrée/sortie (io) ou appelle des données à partir de l'esclave, le transfert de données s'effectuant par l'intermédiaire d'un bus à un fil (B) à l'aide d'un télégramme (T), qui contient les parties suivantes :
-- une partie d'adresse (ad), qui définit le récepteur de données ou la source de données dans l'esclave (S),
-- une partie de données (dt), qui contient les données émises ou les données appelées, et
-- une information de départ (si) et une information de fin (oi),
pour la mise en oeuvre du procédé suivant la revendication 1, dans lequel le composant formant capteur (S3) forme l'esclave (S) et contient, en tant que source de données (dq′), au moyen une source de signaux analogique (q), dont la valeur du signal est numérisée au moyen d'un convertisseur analogique/numérique (ac) et est mémorisée dans une cellule de mémoire (ri), le contenu de cette cellule de mémoire (ri) pouvant être appelé par le maître (M) par l'intermédiaire du bus à un fil (B), qui est relié à une borne de raccordement du composant formant capteur.

12. Composant formant capteur suivant la revendication 11, caractérisé par les caractéristiques suivantes :
- plusieurs sources de signaux analogiques (q1,q2) dans un esclave (S,S3) sont reliées par l'intermédiaire d'un premier multiplexeur (p1) indépendant au convertisseur analogique/numérique (ac),
- la sortie du convertisseur analogique/numérique (ac) est reliée par l'intermédiaire d'un second multiplexeur (p2), qui est synchronisé sur le premier multiplexeur (p1), pour chaque source de signaux analogiques, respectivement à une cellule de mémoire (r1,r2,ri), et
- à la cellule respective de mémoire (r1,r2,ri) sont associées une adresse de dispositif et une adresse interne (da, ia), qui peuvent être commandées par le maître (M), par l'intermédiaire d'un bus à un fil (B).

13. Composant formant capteur suivant la revendication 11 ou 12, caractérisé en ce qu'il possède au minimum trois bornes électriques de raccordement, la première borne (a1) devant être raccordée au bus à un fil (B), la seconde borne (a2) à une tension de polarisation positive et la troisième patte (a3) à une tension d'alimentation négative.

14. Composant formant capteur suivant la revendication 13, caractérisé en ce qu'un dispositif de mesure interne pour une tension U ou un courant I est présent entre les troisième et quatrième bornes de raccordement (a2,a3) et la tension mesurée U et le courant mesuré I doivent être appelés en tant que mots de données par l'intermédiaire du bus à un fil (B).

15. Composant formant capteur suivant la revendication 14, caractérisé par les caractéristiques suivantes :
- le composant formant capteur contient un dispositif de commutation de source de courant (xu), qui modifie le flux de courant I d'une manière définie selon au moins deux échelons, entre les seconde et troisième bornes de raccordement (a2,a3), et/ou
- le composant formant capteur possède un dispositif de commutation de source de tension (xq), qui modifie la tension U de façon définie sur au moins deux échelons entre les seconde et troisième bornes de raccordement (a2,a3).

16. Composant de mémoire dans un système de transmission maître-esclave comportant
- un maître (M), qui envoie des données à un esclave (S) par l'intermédiaire d'un étage d'entrée/sortie (io) ou appelle des données à partir de l'esclave, le transfert de données s'effectuant par l'intermédiaire d'un bus à un fil (B) à l'aide d'un télégramme (T), qui contient les parties suivantes :
-- une partie d'adresse (ad), qui définit le récepteur de données ou la source de données dans l'esclave (S),
-- une partie de données (dt), qui contient les données émises ou les données appelées, et
-- une information de départ (si) et une information de fin (oi),
pour la mise en oeuvre du procédé suivant la revendication 1, dans lequel le composant de mémoire forme l'esclave (S4,S5), qui contient, en tant que source de données ou récepteur de données, un dispositif de mémoire intégré de façon monolithique (mr) possédant une multiplicité de cellules de mémoire (ri) pour des données, qui doivent être appelées et/ou être enregistrées par l'intermédiaire de l'adresse du dispositif et/ou de l'adresse interne (da, ia), la commutation du fonctionnement de lecture au fonctionnement d'enregistrement étant commandée par une adresse d'opération (oa) dans le télégramme (T).

17. Composant de mémoire selon la revendication 16, caractérisé en ce que l'esclave (S4,S5) contient un dispositif de calcul d'adresses (ap) pour des cycles prédéterminés d'adresses et qu'après l'appel d'un tel cycle d'adresses dans les télégrammes (T) suivants, la partie d'adresse (ad) est absente, le cycle d'adresses contenant des opérations de lecture et/ou d'enregistrement.

18. Composant de mémoire selon la revendication 17, caractérisé par les caractéristiques suivantes :
- le dispositif de calcul d'adresses (ap) et le dispositif de mémoire (mr) font partie d'un circuit intégré monolithique,
- le programme pour le dispositif de calcul d'adresses (ap) est mémorisé dans une zone protégée (mp) du dispositif de mémoire (mr) en tant que programme de calcul d'adresses, et
- que le programme de calcul d'adresses est écrit par l'intermédiaire du bus (B) a un fil dans le dispositif de mémoire.

19. Composant de mémoire selon la revendication 16, caractérisé par le fait qu'il contient au minimum trois bornes de raccordement électrique, auquel cas, dans l'état de fonctionnement, la première borne (a1) est reliée au bus à un fil (B), la seconde borne de raccordement (a2) est reliée à une tension d'alimentation positive et la troisième borne de raccordement (a3) est raccordée à une borne d'alimentation négative.

20. Composant de mémoire selon la revendication 17, caractérisé par les caractéristiques suivantes :
- le composant de mémoire ne contient aucune borne de raccordement pour l'envoi d'adresses de mémoire,
- une borne de raccordement, qui est raccordée aux bus à fil (B), sert à envoyer le programme de calcul d'adresses pendant une phase de programmation,
- le nouveau calcul interne d'une adresse dans une phase de fonctionnement normal est synchronisé par un signal externe d'appel (sa) dans le télégramme (T), et
- l'entrée et/ou la sortie de données s'effectuent, pour tous les chiffres d'un mot de données, en parallèle par l'intermédiaire de bornes raccordement de transmission de données.

21. Composant de mémoire selon la revendication 20, caractérisé par le fait que des données vidéo provenant de la gamme du signal de télévision sont enregistrées et lues dans un cycle d'adresses fixe.
